# EUROPEAN PATENT APPLICATION

(11) **EP 2 889 977 A1**
(43) Date of publication of application: **01.07.2015**
(21) Application number: 14197871.8
(22) Date of filing: 15.12.2014
(51) Int. Cl.: H02G 3/32, F16L 3/24, H01Q 1/12

(54) **Perfected device for fixing elongated bodies, in particular coaxial cables, onto a shaped profile**

(30) Priority: 17.12.2013 IT MI20132106
(71) Applicant: Fi.Mo.Tec. S.p.a., 20093 Cologno Monzese (MI) (IT)
(72) Inventor: Feige, Carlo, 20093 Cologno Monzese-Milano (IT); Varale, Alberto, 20093 Cologno Monzese-Milano (IT); Bottazzoli, Massino, 20093 Cologno Monzese-Milano (IT)
(74) Representative: Martegani, Franco

(57) **Abstract**

A device for fixing elongated bodies, in particular coaxial cables, onto a shaped profile, of the type comprising a spacer (2) which carries, at one end, an active element for blocking the elongated body (4) and, at the opposite end (11), a bracket (10) equipped with arms (12) made of an elastic material, suitable for the rapid snap-coupling of said device onto the above-mentioned shaped profile. With respect to the known fixing devices, that according to the invention has the specific feature of being able to be rapidly installed, with a few simple operations which do not require the use of screws or similar items, or the use of tools for the installation of the device onto the shaped profile.

## Description

The invention relates to a perfected device suitable for fixing elongated bodies, such as coaxial cables, onto a shaped profile.

The field of the invention relates to devices used for fixing an elongated body such as a coaxial cable onto a shaped profile, consisting, for example, of a crossbeam.

These fixings are currently effected by means of devices equipped, at one end, with suitable supporting systems of the coaxial cable, and, at the opposite end, with threaded elements which are engaged inside a hole envisaged for this purpose on the profile.

The known solution described above, however, has the disadvantage of requiring the use of accessory means such as screws, nuts and similar items, in addition to the relative tools, whose application is lengthy and laborous, with an inevitable increase in the overall cost of the system and its implementation.

The main objective of the present invention is to provide a new device for fixing elongated bodies onto a shaped profile, which, with respect to similar devices of the known art, is easier and more rapid to install, without the need for accessory components such as screws and nuts, thus avoiding the traditional resort to tools and manpower for this purpose.

This and other objectives are achieved with the fixing device according to the present invention, as characterized in claim 1. Preferred embodiments of the invention are specified in the remaining claims.

With respect to the known fixing devices, that according to the invention has the specific feature of being able to be rapidly installed, with a few simple operations which do not require the use of screws or similar items, or the use of tools for the installation of the device onto the shaped profile.

These and other objectives, advantages and characteristics appear evident from the following description of a preferred embodiment of the device of the invention illustrated, for exemplificative and non-limiting purposes, in the figures of the enclosed drawings.

In these:
- figure 1 illustrates a side view of a device of the known art for fixing coaxial cables onto a shaped profile;
- figure 2 illustrates a perspective view of the fixing device according to the invention, and
- figures 3 to 5 illustrate the various installation phases of the device of figure 2 on a shaped profile.

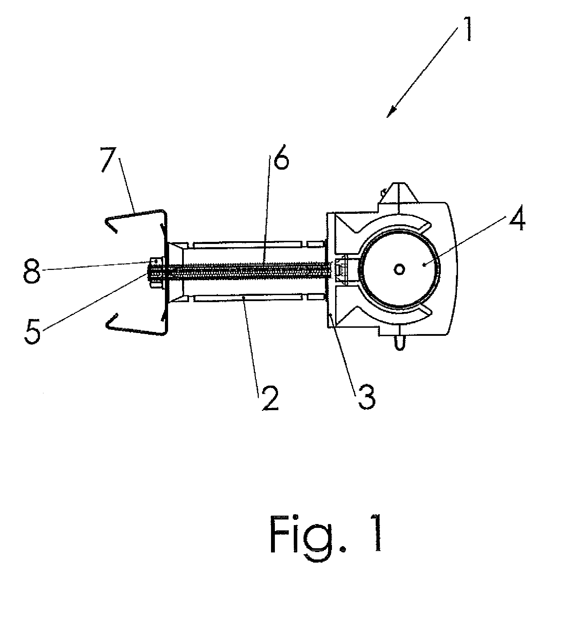

The device of figure 1, indicated as a whole with 1, is composed of a spacer 2 which, at one end, has an active element 3 for blocking an elongated body 4 (in the example illustrated, a coaxial cable). The tip 5 of a screw 6, of the type traditionally used for this type of fixing, protrudes, on the other hand, at the opposite end of the spacer 2. In particular, the screw 6 is passed longitudinally inside the hollow body of the spacer 2, whereas the tip 5 of the screw is introduced into a corresponding hole situated on the shaped profile 7 for supporting the device 1.

The traditional technique described above has the disadvantage of requiring manpower which is necessary for fixing the screw 6 to the profile 7, also with the help of tools for screwing the nut 8 onto the tip 5 of the screw 6. These operations have the drawback of being hindered by the shape of the profile and other encumbrances present. In addition to this, the cavity inside the spacer 2 creates a structural weakening point of the known device.

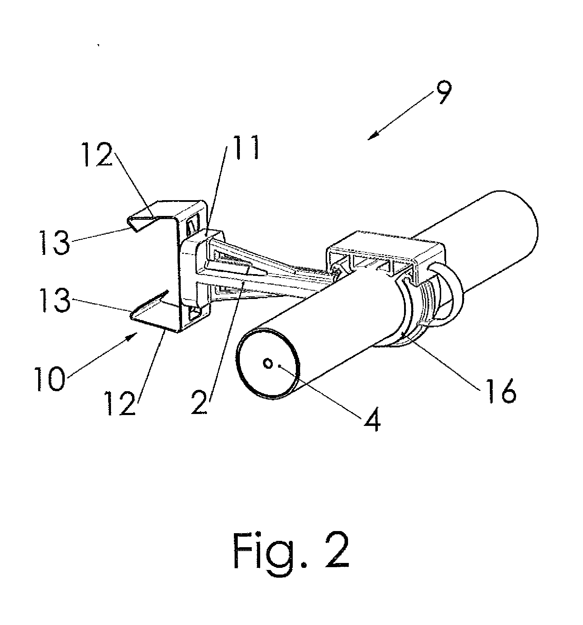

In order to overcome these drawbacks, the invention provides the device 9 of figure 2, which can be substantially distinguished by the presence of rapid snap-coupling means onto the profile 7. In particular, the above-mentioned coupling means consist of a bracket 10 made of an elastic and resistant material, such as a metal sheet, for example, which reproduces the outer form of the shaped profile 7. The bracket 10 is also envisaged at the end 11 of the spacer 2, opposite that carrying the active element 16 for supporting the coaxial cable 4. The same bracket 10 also has elastic arms 12, advantageously provided with edges 13, suitably folded so as to be engaged on the corresponding edges 14 of the profile 7.

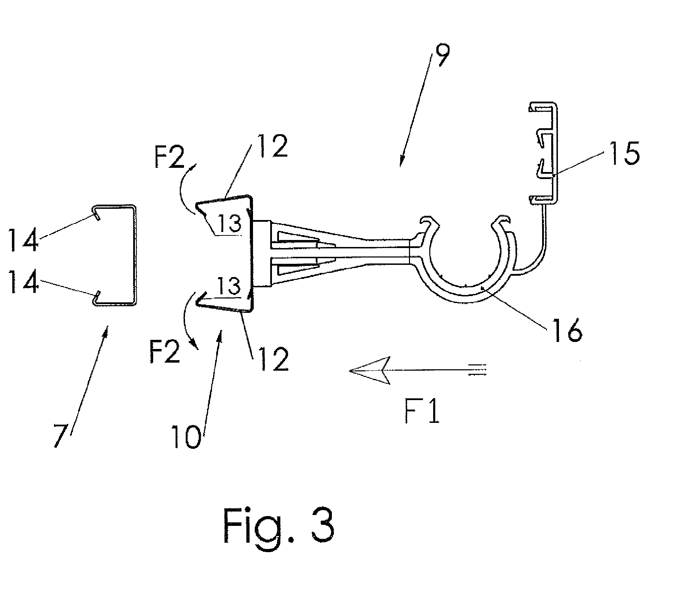

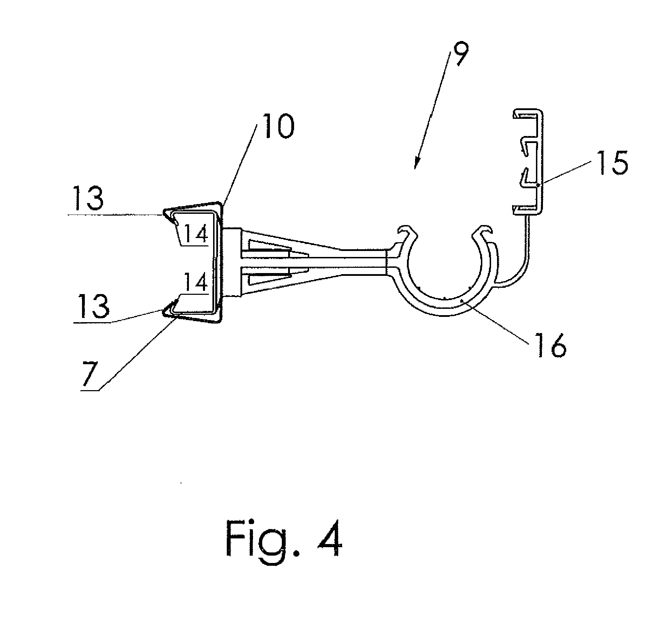

At the moment of installation, the device 9 is oriented with its bracket 10 facing the shaped profile 7 and is pushed towards the latter in the direction of the arrow F1 of figure 3, until the interference of the folded edges 13 of the bracket 10 on the profile 7, cause the reciprocal divergence of the respective elastic arms 12, as represented by the arrows F2. The coupling of the device 9 onto the profile 7 is complete when the above arms 12 of the bracket 10 are elastically closed on said profile 7, with their edges 13 in a snap-engaged position on the respective edges 14 of the same profile 7 (figure 4).

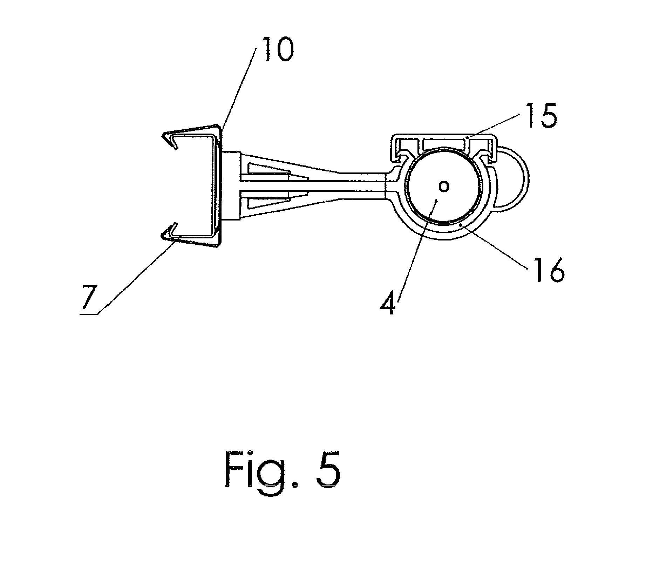

The coaxial cable 4 is subsequently blocked onto the active element 16, by closing its lid 15 on the same cable 4. In the horizontal arrangement of the cable 4, the lid 15 is advantageously positioned so as to be above it, i.e. so as to prevent the weight of the cable 4 from burdening the same lid 15 potentially causing its accidental opening (figure 5).

Modifications can be applied to the invention, as described above and illustrated in the enclosed drawings, which, however, are included in the scope of the same. The rapid snap-coupling means, for example, can also have a different form from that of the bracket 10, which is also suitable for being engaged on the corresponding form of the shaped profile 7 receiving them.

## Claims

1. A device for fixing elongated bodies, in particular coaxial cables, onto a shaped profile, of the type comprising a spacer (2) which carries, at one end, an active element for blocking said elongated body (4), **characterized in that** it comprises, at the opposite end (11), rapid snap-coupling means onto said shaped profile (7) .

2. The device according to claim 1, **characterized in that** said rapid snap-coupling means consist of a bracket (10) equipped with arms (12) made of an elastic material, suitable for being engaged on said shaped profile (7).

3. The device according to claim 2, **characterized in that** said elastic arms (12) have folded edges (13) which are snap-engaged with corresponding edges (14) of the profile (7).

4. The device according to one or more of the previous claims, **characterized in that** said active element (16) is equipped with a lid (15) which, when closed, operating on the elongated body (4) oriented in a horizontal position, is situated on the upper side of the latter.
